Europäisches Patentamt

European Patent Office

Office européen des brevets

(19)

(11) Publication number: **0 051 892**
A1

(12) # EUROPEAN PATENT APPLICATION

(21) Application number: 81201198.9

(22) Date of filing: 29.10.81

(51) Int. Cl.³: **C 08 F 10/00,** C 08 F 4/62

(30) Priority: 12.11.80 NL 8006167

(43) Date of publication of application: 19.05.82 Bulletin 82/20

(84) Designated Contracting States: **AT BE CH DE FR GB IT LI LU NL SE**

(71) Applicant: **STAMICARBON B.V., Postbus 10, NL-6160 MC Geleen (NL)**

(72) Inventor: **van de Leemput, Lambertus Johannes Maria A., Imkerstraat 16, NL-6101 GW Echt (NL)**
Inventor: **Nooijen, Godefridus Arnoldus Henricus, Gouverneur Houbenstraat 16, NL-5981 BL Helden Panningen (NL)**

(74) Representative: **De Boer, Jan et al, OCTROOIBUREAU DSM Postbus 9, NL-6160 MA Geleen (NL)**

(54) Supported chromium-oxide catalyst and polymerization of ethylene using this catalyst.

(57) The invention is directed to the preparation of a supported chromium-oxide-type catalyst by applying to an inert inorganic support a complex of a chromium compound and an organometallic compound of a metal of Group II or III of the Periodic Table and its use in polymerizing 1-alkenes containing 2-8 carbon atoms, optionally admixed with at most 15 mol.-% of at least one other 1-alkene containing 3-15 carbon atoms.

EP 0 051 892 A1

STAMICARBON B.V.

Inventors: Lambertus J.M.A. VAN DE LEEMPUT, of Echt

Godefridus A.H. NOOIJEN, of Helden-Panningen

PE 3239
0051892

1

# SUPPORTED CHROMIUM-OXIDE CATALYST AND POLYMERIZATION OF ETHYLENE USING THIS CATALYST

The invention relates to a process for the preparation of a supported chromium-oxide type catalyst by applying to an inert inorganic support a complex of a chromium compound and an organometallic compound of a metal of Group II or III of the Periodic Table in which $C_1-C_{20}$ hydrocarbyl groups are bound to the metal, and by subsequently heating the supported complex chromium compound in a non-reducing atmosphere at a temperature of 200-1200 °C.

The invention also relates to the polymerization of a $C_2-C_8$ 1-alkene, in particular ethylene, whether or not with minor amounts of at most 15 mol.% of one or more $C_3-C_{15}$ 1-alkenes, using such a catalyst.

Dutch patent application 76.05535 describes the preparation of a complex of a chromium compound and an organometallic compound of a metal of Group II or III of the Periodic Table by starting from a chromium-1,3-diketo compound, in particular chromium acetylacetonate. According to Inorganic Synthesis V, pp. 130-131, chromium (III) acetylacetonate [tris(2,4-pentanediono)chromium(III)] can be prepared from a chromium(III) salt and acetylacetone in the presence of urea, which hydrolyzes during the reaction and in this way functions as an ammonia generator.

The conversion of chromium acetylacetonate with an organometallic compound of a metal of Group II or III of the Periodic Table to form complex compounds must be carried out in inert organic solvents, e.g. hydrocarbon solvents, on account of the reactivity of the organometallic compounds, such as aluminium trialkyls and magnesium dialkyls. Chromium acetylacetonate dissolves very readily in aromatic hydrocarbons, but little though noticeably in aliphatic hydrocarbons. In spite of the low solubility in aliphatic hydrocarbons the reaction with, for instance, aluminium trialkyls or magnesium dialkyls proceeds readily, especially when heat is applied, for instance by boiling with reflux cooling. If the reaction is to be accelerated yet further, and it is preferred not to work in an aromatic hydrocarbon solvent only, the solubility in aliphatic hydrocarbons can be increased by adding limited amounts of aromatic hydrocarbons to the aliphatic hydrocarbon solvent. However, this is not normally necessary.

It was originally supposed that the formation of the complex chromium-aluminium or chromium-magnesium compounds could be effected only with a chromium-1,3-diketo compound, e.g. chromium acetylacetonate.

It has now been found that such catalysts or catalyst components can be prepared more easily by reacting, in an inert organic solvent, a chromium compound other than a chromium-1,3-diketo compound with an organometallic compound of a metal of Group II or III of the Periodic Table, in which $C_1-C_{20}$ hydrocarbyl groups are bound to the metal, applying the reaction product to an inert inorganic support, preferably silica, and heating the support with the reaction product deposited on it at a temperature of 200 to 1200 °C in a non-reducing atmosphere.

The chromium compound is converted with an organometallic compound of a metal of Group II or III of the Periodic Table, such as beryllium, magnesium, boron, aluminium or gallium. The hydrocarbyl groups in these compounds are preferably $C_1-C_{20}$ alkyl groups. Suitable compounds are in particular aluminium trialkyls and magnesium dialkyls. The alkyl groups in the magnesium dialkyls are preferably $C_4-C_{12}$ alkyl groups. Suitable organomagnesium compounds are diethyl magnesium, dipropyl magnesium, diisopropyl magnesium, diamyl magnesium, dihexyl magnesium, dioctyl magnesium, didecyl magnesium, didodecyl magnesium and, preferably, dibutyl or diisobutyl magnesium, but also dicycloalkyl magnesium with identical or different $C_3-C_{12}$, preferably $C_5-C_6$, cycloalkyl groups. An alkyl and a cycloalkyl group may also be bound to the magnesium. Although alkyl or cycloalkyl magnesium compounds are preferred, magnesium aryls may also be used, in particular dphenyl magnesium, but also ditolyl and dixylyl magnesium. The diaryl magnesium compounds are insoluble or poorly soluble in aliphatic hydrocarbons and are therefore dissolved in aromatic hydrocarbons. The organomagnesium compounds can be prepared in a known manner (see for instance Organometallic Compounds; Vol. 1; G.E. Coates; M.L.H. Green and K. Wade; Organometallverbindungen; F. Runge). In particular, solutions of magnesium alkyls prepared according to Dutch patent specification 139,981 are used.

Suitable aluminium compounds are aluminium trialkyls and organoaluminium compounds of the general formula $(R_4)_2AlH$, wherein $R_4$ represents a $C_1-C_{10}$ alkyl group. Also aluminium compounds known from the German Auslegeschriften 1,956,353; 1,183,084; 1,136,113 and 1,186,633, containing one or more groups derived from a diene, can be used. By preference, an aluminium trialkyl is used.

The conversion of the chromium compound with an organomagnesium or organoaluminium compound should be carried out in a solvent which is inert with respect to this compound. By preference, this conversion of the chromium compound with the organometallic compound is carried out in a hydrocarbon solvent, more in particular in one or more aliphatic hydrocarbons, such as hexane, heptane or in a low-boiling gasoline consisting mainly of hexanes and/or heptanes.

Most chromium compounds are insoluble or hardly soluble in aliphatic and/or cycloaliphatic hydrocarbons and will be dispersed therein. Chromium salts of aliphatic carboxylic acids are slightly soluble in hydrocarbons and are therefore preferably used, as, for instance, the chromium salt of acetic acid, propionic acid, hexane carboxylic acid, octane carboxylic acid, decane carboxylic acid, lauric acid, myristic acid, palmitic acid, stearic acid, arachic acid. Chromium salts of unsaturated acids, such as oleic acid, brassidic acid, pelargonic acid, linoleic acid and linolenic acid, are even readily soluble and are therefore particularly preferred. When an organomagnesium or organoaluminium compound is added, conversion appears to be possible, though it often process at a slow rate. It is advisable to heat the reaction mixture, for instance to boil it with reflux cooling, in order to increase the reaction velocity. That a reaction occurs is proved by the discolouration. The reaction products in general have a dark brown colour. The Mg/Cr or Al/Cr atomic ratio should preferably be 0.5 : 1 to 15 : 1, more in particular 1 : 1 to 6 : 1.

It will be clear that when the invention is here discussed or elucidated with reference to magnesium- or aluminium compounds, this limitation is applied only for clarity's sake, but that, of course, the invention is not limited thereby and comprises the application of compounds of other metals of Groups II and III of the Periodic Table as well.

0051892

The solution of the reaction product, which may also comprise undissolved reaction product, is combined with an inert inorganic support, preferably silica. To this end, the solution can be added slowly to a support suspended in the solvent, while the mixture is being stirred. If the solution is added to silica, the liquid in most cases appears to become colourless after some time. In some cases the deposition on silica is not quite complete and the solvent remains slightly coloured. The support is coloured by the chromium compound deposited on it. The solvent can be filtered off, or evaporated in the case of incomplete deposition on the support.

The inert inorganic support is preferably an oxide, such as silica, alumina, mixed alumina-silica, zirconium oxide, thorium oxide, magnesium oxide. Silica is known and applicable in many forms, applicable insofar as it is calcination-resistant. The most suitable silica are the so-called xerogels, in particular the xerogels with a large pore volume of at least 1.6 $cm^3/g$ and preferably at least 1.5 $cm^3/g$.

It has proved to be advantageous to dry the support, for instance by heating in dry air, before the complex chromium compound is deposited on it. Drying should be effected in such a way that the support preferably no longer contains any physically adsorbed water.

The amount of complex chromium compound applied to a support may vary within wide limits but usually ranges between 0.01 and 10 wt.-%, based on the total composition. It is possible to use more or less, but this offers no advantage. By preference the amount of chromium complex applied to the support is such that the chromium content of the latter is 0.02 to 2 wt.-%, more in particular 0.05 to 1 wt.-%.

The support with the chromium compound deposited on it is heated to a temperature of 200 to 1200 °C in a non-reducing atmosphere, such as oxygen, air, nitrogen, carbon dioxide or a noble gas. It is assumed that a chromium oxide is thereby formed. It is not known how this is bound to aluminium or magnesium and to the support. By preference, the support with the chromium compound is heated at 400 to 1200 °C, more in particular at 500 to 1100 °C. The heating periods may vary from a few seconds to tens of hours or more. At temperatures between 500 and 1100 °C the heating period can in general amount from 30 minutes to 6 hours.

The optimum period of heating can be easily established experimentally by one skilled in the art, by preparing catalysts with the same composition under the same conditions, varying only the heating period at a particular temperature, and determining the polymerization properties of the resulting catalyst.

By preference, after cooling to ambient temperature the supported chromium oxide is introduced into a hydrocarbon solvent, which is preferably the polymerization medium. This can be an aliphatic or cyclic hydrocarbon, such as butane, isobutane, normal or branched pentanes, hexanes, heptanes, octanes etc., cyclopentane, cyclohexane, cycloheptane, cyclooctane etc., and mixtures thereof, particularly fractions directly or indirectly recovered from mineral oil, such as low-boiling gasoline, gasoline, kerosine or gas oil, which, although they may contain aromatics, predominantly consist of aliphatics and/or cycloaliphatics.

Also aromatic hydrocarbons such as benzene, toluene, xylenes or halogenated hydrocarbons are quite suitable, but due to cost and toxicity of these solvents it will normally be preferred to use aliphatic hydrocarbons or mineral oil fractions.

The polymerization of 1-alkenes with the catalysts according to the invention is preferably carried out in an inert dispersant under such conditions that a suspension of the polymer in the dispersant is obtained. This means that for the polymerization of ethylene, a polymerization temperature below 105 °C will in general be used, preferably a temperature below 100 °C. In highly volatile solvents, e.g. in isobutane, the suspension polymerization can also be carried out at 110 °C or even at higher temperatures. In these solvents polymerization can be conveniently carried out also at temperatures between 100 and 105 °C.

Polymerization is also possible at higher temperatures e.g. at 150 to 200 °C, this generally yielding a solution of polyethylene in the solvent which can be further processed in a known manner. The polymerization can also be carried out as a gas-phase polymerization, realiza-tions of which are known from, e.g., United Kingdom patent specification 1,373,982. The polymerization of propylene and higher olefins can be carried out also in a liquid monomer.

It can be conducive to the polymerization process to add to the suspension agent or solvent in which the polymerization is carried out an organometallic compound of an element of Group II or III of the Periodic Table, such as beryllium, magnesium, boron, aluminium or gallium. The molar ratio between the organometallic compound and the supported chromium component may vary within wide limits, e.g. from 0.1 : 1 to 200 : 1. By preference, the ratios lie between 5 : 1 and 40 : 1.

In order to achieve a good polymerization rate, polymerization will normally be carried out at elevated temperature, e.g. 50 °C or over, preferably at temperatures of at least 70 °C. The polymerization can be carried out at atmospheric pressure, but also at elevated pressure, which is a necessity when low-boiling solvents are used, such as butane, isobutane and pentane. By carrying out the polymerization under pressure, higher yields are achieved, so that normally elevated pressures, up to for instance 100 $kg/cm^2$, will be applied. Higher pressures, up to as high as for instance 2000 $kg/cm^2$ or more, are possible but are not normally used, for practical considerations. By preference polymerization is carried out at pressures between 6 $kg/cm^2$ and 80 $kg/cm^2$, in particular between 12 and 50 $kg/cm^2$.

Normally, such an amount of catalyst is used that the solvent contains 0.001 to 10 mmol chromium per litre, preferably 0.01 to 1 mmol/l.

The suspensions or solutions obtained in a solvent in the polymerization can be processed in a known manner.

In the present process, known modifications can be applied. The molecular weight, for example, can be controlled by addition of hydrogen or other common modifiers. The polymerization may also be carried out in two or more parallel or series-arranged stages, in which, if desired, different catalyst compositions, temperatures, residence times, pressures, hydrogen concentrations, etc. may be employed. For example, products with a wide molecular weight distribution can be prepared by using such conditions in the first stage that a product of high molecular weight will be formed, and such conditions in the second stage that a product of relatively low molecular weight will be formed.

The invention will be elucidated by the following examples without, however, being restricted thereto.

Examples 1-6

In 100 ml dry gasoline with a boiling range of 65-85 °C, 5 mmol of a chromium compound was suspended. While boiling with reflux cooling, the mixture was stirred for 10 minutes. Chromium oleate (example 5) proved to dissolve completely. The other compounds did not dissolve or dissolved only to a small extent.

Subsequently, triisobutyl aluminium was trickled into the mixture, while stirring and while boiling with reflux cooling. In example 5, 15 mmol triisobutyl aluminium was added. In the other examples 30 mmol triisobutyl aluminium was added. The resulting complex compounds had a dark brown colour. In a few cases some residue was left.

Of a silica-xerogel with a pore volume of 1.6 cm$^3$/g and a specific surface area of 250 m$^2$/g, which had been heated for 4 hours at 200 °C in order to remove physically adsorbed water, 20 g was suspended in 150 ml gasoline (boiling range 65-85 °C). Into this suspension a chromium solution obtained according to the above process was trickled, after which the mixture was stirred for another 15 minutes. Then the gasoline was evaporated. After that, the support with the chromium compound deposited on it was heated at 900 °C for 1 hour. The catalyst was cooled under dry nitrogen and subsequently suspended in so much gasoline that the concentration was 10 g catalyst per 100 ml gasoline. A fraction of the calcinated catalyst was analyzed for chromium.

Polymerization of ethylene

In a stirred autoclave (3.2 litres), 1500 ml dry gasoline is introduced, to which subsequently 1 ml catalyst suspension containing 0.1 g catalyst is added. Then 2 mmol trioctyl aluminium is added. Ethylene is forced in together with 10 % hydrogen until an ethylene pressure of 4.6 atm. has been reached, after which the autoclave contents are heated to 88 °C, at which temperature polymerization is carried out for 1.5 hours.

The yields in g polyethylene per mmol of chromium per atmosphere of ethylene pressure and per hour are given in the table.

Table

| Example | chromium compound | wt.-% Cr on support | polymerization activity |
|---------|-------------------|---------------------|-------------------------|
| 1 | chromium(III) acetate | 0.87 | 836 |
| 2 | chromium(II) acetate | 0.30 | 2481 |
| 3 | chromium(III) diisopropyl-salicylate | 1.03 | 1016 |
| 4a | chromium(III) chloride | 0.11 | 1880 |
| 4b | chromium(III) chloride in toluene | 0.49 | 1492 |
| 5 | chromium(III) oleate | 0.24 | 3626 |
| 6 | chromium(III) stearate | 0.38 | 2683 |

CLAIMS                          0051892

1. Process for the preparation of a supported chromium-oxide type catalyst by applying to an inert inorganic support a complex of a chromium compound and an organometallic compound of a metal of Group II or III of the Periodic Table, in which $C_1$-$C_{20}$ hydrocarbly groups are bound to that metal, and by subsequently heating the supported complex chromium compound at 200-1200 °C in a non-reducing atmosphere, this process being characterized in that for the formation of the complex of a chromium compound and an organometallic compound of a metal of Group II or III, use is made of a chromium compound other than a chromium-1,3-diketo compound.

2. Process for the polymerization of a $C_2$-$C_8$ 1-alkene, in particular ethylene, whether or not with minor amounts of at most 15 mol.-% of one or more other $C_3$-$C_{15}$ alkenes, characterized in that the polymerization is carried out in the presence of a catalyst according to claim 1.

**European Patent Office**

# EUROPEAN SEARCH REPORT

## DOCUMENTS CONSIDERED TO BE RELEVANT

| Category | Citation of document with indication, where appropriate, of relevant passages | Relevant to claim |
|---|---|---|
| A | <u>GB - A - 1 406 339</u> (MITSUBISHI) <br><br> * claims 1,8; page 2, lines 8-11; 17-22; 78-84 * <br><br> & NL - A - 73 08725 | 1,2 |
| A | <u>GB - A - 1 046 618</u> (STANDARD OIL) <br><br> * claims 1,4,11-17; page 1, lines 39-61; page 2, lines 83-94 * <br><br> & NL - A - 293 230 | 1,2 |
| A | <u>GB - A - 1 184 831</u> (COLUMBIAN CARBON CY.) <br><br> * claims 1-19; page 2, line 128 to page 3, line 15; page 4, lines 54-59; example 3 * <br><br> & NL - A - 67 01802 | 1,2 |
| A | <u>GB - A - 1 183 713</u> (COLUMBIAN CARBON CY.) <br><br> * Claims 1-26; page 2, line 113 to page 3, line 1; page 3, lines 27-35; example 3 * <br><br> & NL - A - 67 01852 | 1,2 |
| D | <u>GB - A - 1 575 352</u> (STAMICARBON) <br><br> * claims 1,7-13, 19-26 * <br><br> & NL - A - 76 05535 | 1,2 |
| A | <u>US - A - 4 119 773</u> (A.N. SPECA) <br><br> * claims 1-15; column 2, lines 20-24; column 3, lines 6-28 * | 1,2 |

### CLASSIFICATION OF THE APPLICATION (Int. Cl. 3)

C 08 F 10/00
C 08 F 4/62

### TECHNICAL FIELDS SEARCHED (Int.Cl. 3)

C 08 F 10/00-
10/14
110/00-
110/14
210/00-
210/16
C 08 F 4/62

### CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 11.02.1982 | WEBER |

EPO Form 1503.1 06.78